# NEW EUROPEAN PATENT SPECIFICATION

(11) **EP 3 335 564 B2**
(45) Date of publication and mention of the opposition decision: **11.06.2025**
(45) Mention of the grant of the patent: 23.09.2020
(21) Application number: 17189015.5
(22) Date of filing: 18.04.2008
(51) Int. Cl.: A21B 1/42, A21B 1/48

(54) **PROCESS TO CONTROL THE AIR-FLOW AND AIR-LEAKAGES BETWEEN TWO CHAMBERS**
VERFAHREN ZUR STEUERUNG DES LUFTSTROMS ZWISCHEN ZWEI BACKKAMMERN
PROCESSUS DE CONTRÔLE DU DÈBIT D'AIR ET DES FUITES D'AIR ENTRE DEUX CHAMBRES DE CUISSON

(43) Date of publication of application: 20.06.2018
(62) Divisional of application: 13186178.3
(73) Proprietor: GEA Food Solutions Bakel B.V., 5761 EN Bakel (NL)
(72) Inventor: KUENEN, Hendrikus Antonius Jacobus, 5825 DA Overloon (NL)
(74) Representative: Kutzenberger Wolff & Partner

(56) References cited:
- EP-A1- 0 558 151
- EP-A1- 1 221 575
- EP-A1- 1 249 168
- EP-A1- 1 690 453
- US-A- 2 256 003
- US-A- 5 515 775
- US-A1- 2005 092 312
- US-A1- 2006 040 029

## Description

The present invention relates to a process how to operate this oven.

An oven is for example known from EP 1 221 575 and EP 0 558 151 and is suitable for the complete or partial cooking of edible products, especially protein containing products, like chicken, hamburgers cordon bleu etc.. The temperature and humidity can be set such, that during the residence time in the oven, which is dependent on the length and velocity of the conveyor belt, the desired cooking and, if needed, browning can be effected.

Furthermore, the ovens known from the state of art, such as disclosed in US2005092312, EP1249168, US2006040029 and EP1690453, comprise two chambers, which are separated by a partition wall. The conveyor belt moves from the first chamber to the second chamber via an opening in the partition wall. Each chamber has its own heating means and ventilation means, so that different temperature-, humidity- and/or fluid-flow-conditions can be set in each chamber, respectively. However, the cooking process in the ovens according to the state of the art is often not stable and/or not reproducible.

It is therefore an objective of the present invention to provide a process that is stable and leads to reproducible process conditions in the respective chambers.

The problem is solved with a process to operate an oven according to claim 1.

Due to the fluid-leakage reduction, the process conditions, e.g. temperature, humidity and/or the flow-pattern, in the individual chambers can be controlled very well and thus reproducible conditions can be established. The inventive oven is easily operated. By means of a controlled leakage, process conditions in the individual chambers can be influenced.

The subject matter "Control a fluid leakage" means controlling the magnitude and/or the direction of the leakage from the first- to the second chamber or vice versa.

The oven comprises a first and a second chamber, which are separated by separation means, for example a partition. The inventive oven further comprises conveyor means for guiding products from the inlet through these chambers to the outlet. The conveyor means are preferably an endless conveyor belt. In the separation means, there is a passage through which the conveyor means are directed from the first- to the second chamber. It has now been found out, that due to the different conditions in the chambers, respectively, and/or due to the motion of the conveyor means an uncontrolled leakage of process gas, e.g. air and/or process vapor, between the chambers through the passage occurs, which is unpredictable in its magnitude and its direction. Due to this leakage, the process parameters are influenced unpredictably, sometimes resulting in uncontrollable conditions, which makes the cooking process non-reproducible.

The oven comprises means to reduce, preferably eliminate and/or control the process-fluid leakage between the two chambers.

This means to reduce, preferably eliminate, and/or control the process-fluid leakage between the two chambers is a fluid flow, introduced, preferably injected, in the vicinity of the passage. Preferably, the volume-flow-rate of the fluid flow and/or its pressure are adjustable. The fluid flow can be taken from the ambient and/or out of one or both of the chambers.

Due to the introduction of the fluid flow, the pressure in the vicinity of the passage is preferably higher than the pressure in the first- and/or the second chamber, respectively, so that no leakage of process fluid out of one of chambers to the other chamber occurs.

Preferably, the fluid flow is divided into a first part that flows from the passage towards the first chamber and a second part that flows from the passage towards the second chamber. By increasing the fluid flow, the volume flow towards one or both chambers will also be increased and vice versa. The division of the fluid flow depends, for example, on the pressure level in the first and second chamber, respectively. However, it is also possible to control the ratio how the fluid flow is split. This can be done, for example, with one or more valves. By choosing from which chamber more fluid is taken, the direction of flow can also be influenced.

In an example not according to present invention, at least one of the flows towards the chambers is guided in the vicinity of the partition by guiding mean. This guiding means can be for example a tunnel or a tube that extends from the passage towards the first and/or the second chamber. The fluid flow is introduced into this guiding means, preferably in the middle and then separated into the part first part that flows towards the first chamber and a second part that flows towards the second chamber.

Normally, each chamber comprises at least one fan and ducts for a fluid flow, especially the fluid circulation, in the chamber to adjust the temperature and/or humidity in the chamber and/or to improve the heat transfer in the chamber, respectively. From this main fluid flow, the fluid flow to reduce, preferably control, the leakage at the passage is preferably separated. Preferably, the oven comprises means to control from which chamber the fluid is taken, the volume-flow-rate and/or the split of the fluid flow between the chambers. This preferred embodiment of the present invention has the advantage, that the cooking process can be executed each time under the same conditions. Furthermore, the oven can be operated such that no, only a minimum or controlled leakage around the passage occurs.

The control means can be adjusted manually or automatically. Preferably, the control means are adjusted automatically, for example by a PLC-controller. The PLC-controller receives information about the process and adjusts, for example, the flow to reduce or control the leakage automatically. Furthermore the PLC-controller can preferably control out of which chamber the fluid is taken and/or how it is divided after it has been injected in the vicinity of the passage. If, for example the circulation speed of the fluid in one chamber is increased to improve, for example, the heat-transfer, the pressure increases in this chamber, which, according to the state of the art results in an increased leakage. According to the present invention, however, the leakage between the chambers can be reduced, preferably controlled, to a desired level by adjusting the fluid-flow that reduces this leakage.

The oven comprises controlled ventilation means between the first chamber, the second chamber and/or the ambient. This embodiment allows to adjust process parameters in one chamber by controlled ventilation of the chamber with process fluid out of the other chamber or the ambient. If, for example, the first chamber is operated at a higher temperature and/or humidity than the second chamber, process fluid, e.g. air, can be ventilated from the second to the first chamber, in case the process parameters are too high in the first chamber and vice versa in case that the process parameters are too low in the second chamber. If, for example, the process conditions in the second chamber are above the set point, air can be drawn from the ambient into the second chamber. This controlled ventilation is reduced or stopped as soon as the desired process conditions have be reached. All this can be done via the fans, the passage and/or additional ventilation means. The controlled ventilation is preferably executed by a automatic controller, e.g. a PLC-controller.

The above made disclosure also applies to the embodiments disclosed below.

Not according to invention is a process to operate an oven comprising:
- a first chamber and a second chamber, which are separated by separation means,
- conveyor-means for guiding products from the inlet through these chambers to the outlet,
- temperature control means for controlling the temperature and/or humidity in each chamber individually using a fluid, respectively, and
- a passage in the separation means through which the conveyor means are directed from the first chamber to the second chamber,
whereas a fluid flow is injected in the vicinity of passage to reduce fluid leakage between the first chamber and the second chamber.

Not according to invention is a process to operate an oven comprising:
- a first chamber and a second chamber, which are separated by separation means,
- conveyor-means for guiding products from the inlet through these chambers to the outlet,
- temperature control means for controlling the temperature and/or humidity in each chamber individually using a fluid, respectively, and
- a passage in the separation means through which the conveyor means are directed from the first chamber to the second chamber,
whereas the leakage between the first chamber, the second chamber (4) and/or the ambient is controlled in order to adjust process parameters in at least one chamber.

Due to the leakage, ambient air can be introduced into the first and/or the second chamber.

The present invention is now explained in further detail according to the attached figures. These explanations do not limit the scope of protection.
- Figure 1: shows an oven
- Figure 2: shows another oven
- Figure 3: shows details of the injection of the fluid flow in the vicinity of the passage.
- Figure 4: shows even further details of the injection according to Figure 3.
- Figures 5- 7: show an examples of the controlled ventilation.
- Figures 8, 9: show another example of controlled ventilation via the passage 30

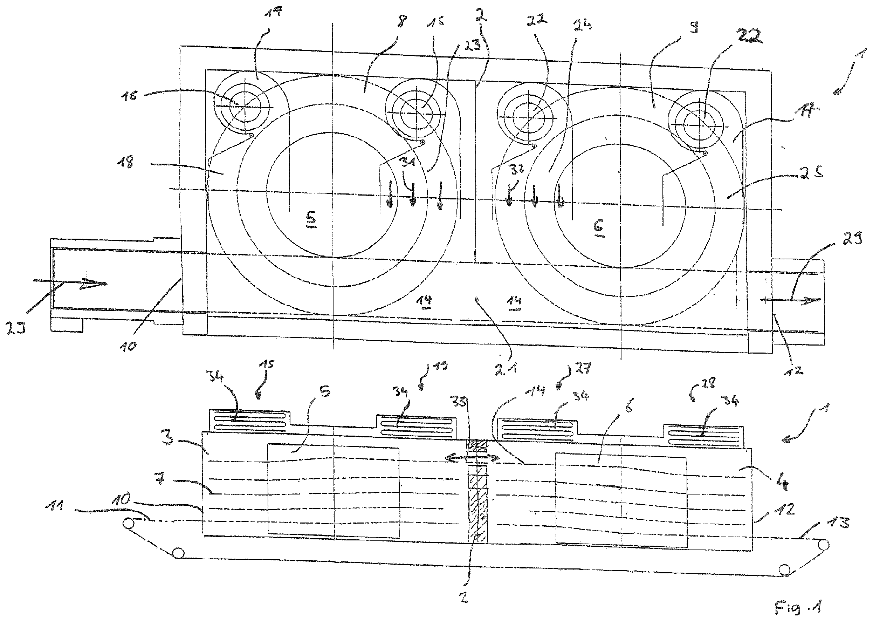

Figure 1 shows an oven according to the state of art. The oven 1 is divided into a first chamber 3 and a second chamber 4. The chambers are divided by means of a partition 2. A rotatable drum 5, 6 is arranged in each of these chambers, around which the conveyor belt 7 is guided along two helical paths 8, 9. The endless conveyor belt enters the oven 1 via the entrance 10 by a straight conveyor belt section 11 and leaves the oven 1 via the exit 12, likewise by means of a straight section 13. The two helical sections 8, 9 are connected by the straight conveyor belt section 14, which lies at the top. The partition means 2 comprise a passage 2.1 for the belt section 14. This passage 2.1 is larger than the conveyor belt 14. It has now been found, that a leakage 33 of the process-fluid e.g. air and steam occurs via this passage. This leakage-flow is unpredictable. Internal and external conditions can influence this leakage-flow in its magnitude and/or direction, so that the process-conditions in the oven are often not reproducible.

The heating means, which are overall denoted by 15, 19, 27, 28, are arranged in the top of the housing. These heating means 15, 19, 27, 28 each comprise a fan 16, 22 with a spiral casing 17, which opens into a duct 18, 23 - 25. The heating elements 34 are situated in the ducts, respectively. The process fluid, e.g. air and steam, is sucked up by the fans out of chambers 3, 4 and is forced into the duct via the spiral casing 17, respectively. The process fluid 31, 32 flows past the heating elements 34 and is then reintroduced into the respective chamber 3, 4. The motion of the products (not depicted) to be cooked in the oven is depicted by arrows 29.

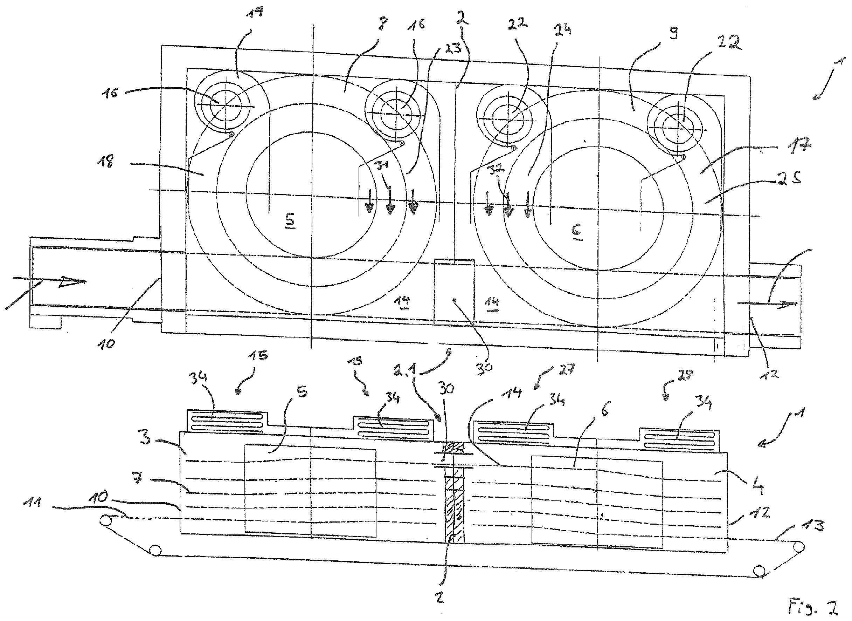

Figure 2 shows the oven used in the in invention, which comprises in the passage 2.1 guiding means 30 in the form of a tube or a tunnel. Into this tube, preferably in the middle, an airflow 26 is injected, which results in a higher pressure in the tube 30. This higher pressure forces the air 26 to flow to the left towards the first chamber 3 and to the right towards the second chamber 4. The magnitude of air flow 26 is preferably controllable such that the leakage is either reduced to zero or has a desired magnitude and a desired direction. Preferably also the division of the flow 26 in the tube 30 is controlled.

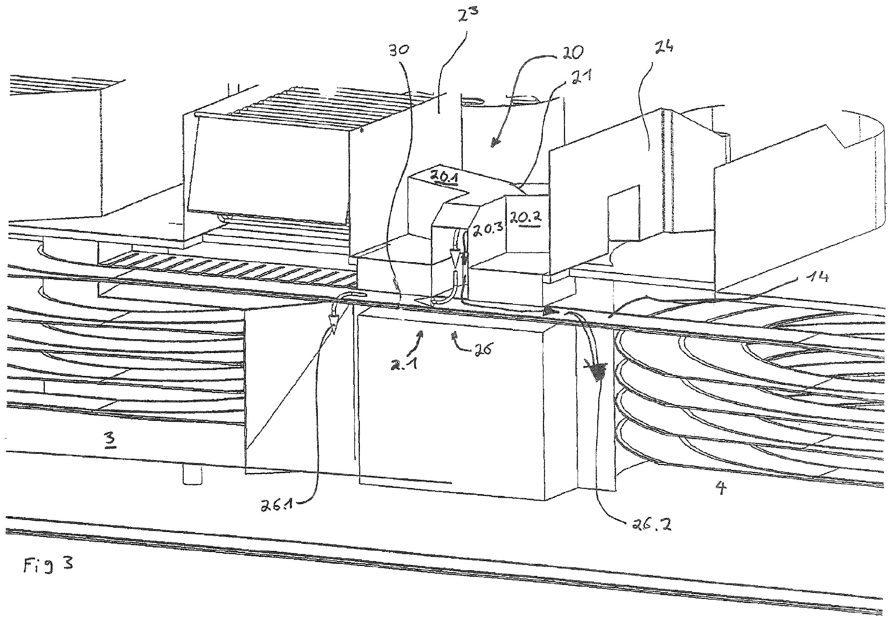

Figure 3 shows further details of the fluid injection into tube 30. Both branches 20.1, 20.2 of a Y-shaped duct 20 are connected to the ducts 23, 24, respectively. The ducts 23, 24 recycle the process fluid 31, 32 back into the chambers 3, 4, respectively. In the duct 20, a valve 21 is arranged, which allows to control from which chamber 3, 4 the process fluid is taken. In the position of the valve as shown in figure 3, all air is taken out of chamber 3. After the air flow 26 has passed the valve 21, it flow into the base 20.3 of the Y-shaped duct 20 and from there it is injected into tube 30, where it is split into the flows 26.1 and 26.2., which flow into chamber 3, 4, respectively. Valve 21 also allows to control the magnitude of flow 26. The setting of valve 21 can be done manually or automatically, for example by a PLC-controller.

This PLC controller adjusts the valve 21, which is driven by a motor, based on desired process conditions and/or measured parameters like temperature and/or humidity in the individual chamber, especially based on the desired leakage in the passage. Additionally, the inventive oven can comprise means, which is preferably located in the tube 30, to adjust the split of air flow 26.

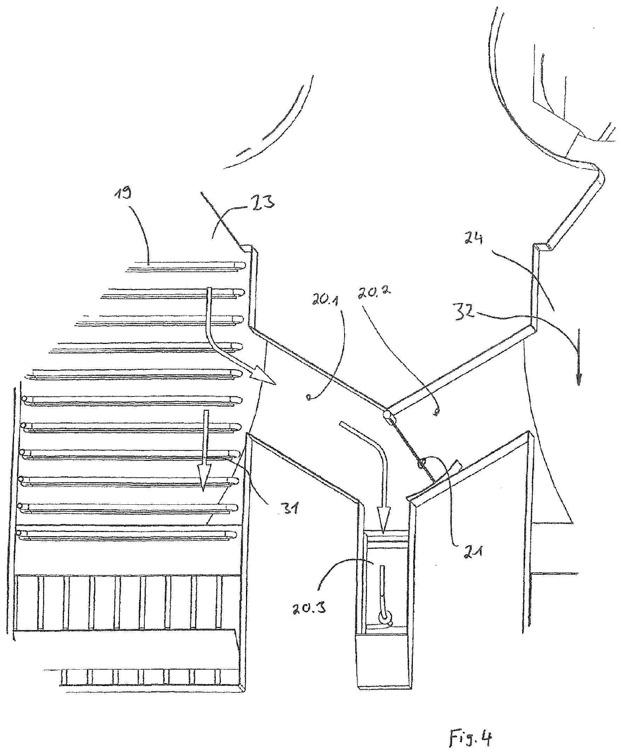

Figure 4 shows valve 21 in detail.

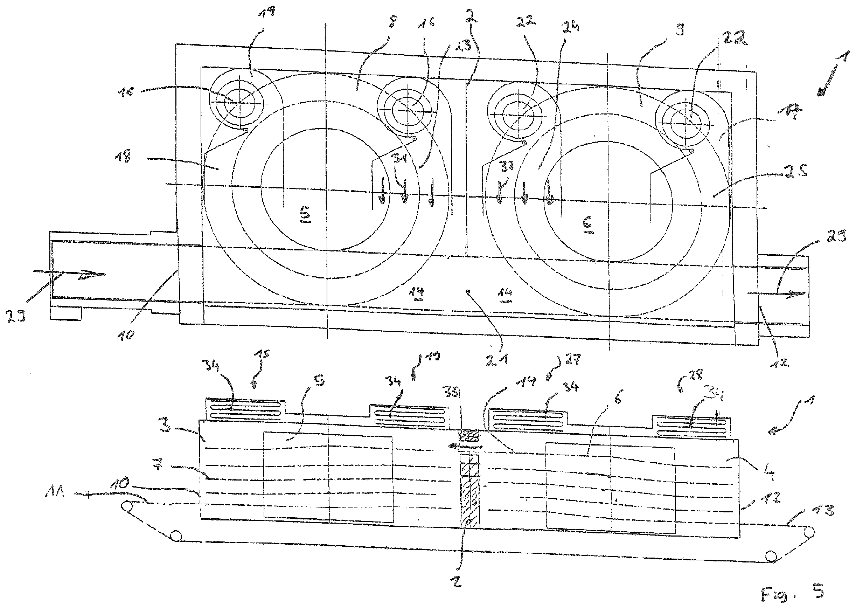

Figure 5 shows an example of controlled leakage between the first chamber 3 and the second chamber 4. The first chamber 3 is operated at a higher temperature and/or humidity than the second chamber 4. In case the temperature and/or humidity in chamber 3 is above the desired set point, a controlled leakage 33 from the second to the first chamber is initiated, as depicted by arrow 33. This leakage is maintained until the process conditions in the first chamber are in the desired range and then stopped again. The place where the leakage 33 takes place can be the passage 2.1 but also any other fluid-connection between the two chambers. The controlled leakage between the two chambers can be initiated and maintained by reducing the pressure in the first chamber 3 and/or increasing the pressure in the second chamber 4. The reduction of the pressure in chamber 3 can be executed by removing air from this chamber for example through the inlet 10. Likewise, air can be forced into chamber 4 to increase its pressure, for example via outlet 12. Alternatively or additionally, air from chamber 4 can be forced, for example by a fan, into chamber 3.

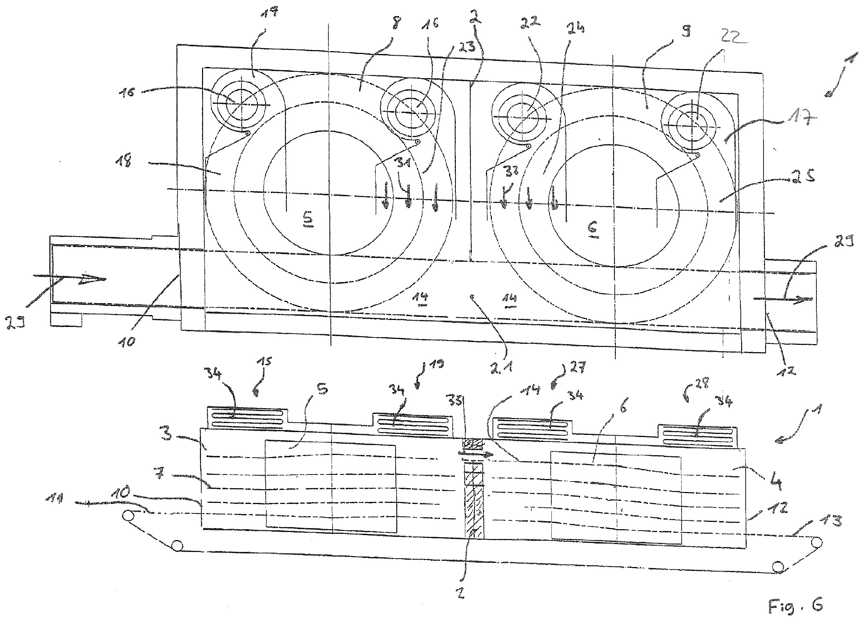

Figure 6 shows another example of controlled leakage between the first chamber 3 and the second chamber 4. The first chamber 3 is operated at a higher temperature and/or humidity than the second chamber 4. In case the temperature and/or humidity in chamber 4 are below the desired set point, a controlled leakage 33 from the first to the second chamber is initiated, as depicted by arrow 33. This leakage is maintained until the process conditions in the second chamber are in the desired range and then stopped. The place where the leakage 33 takes place can be the passage 2.1 but also any other fluid-connection between the two chambers. The controlled leakage between the two chambers can be initiated and maintained by increasing the presure in the first chamber 3 and/or reducing the pressure in the second chamber 4. The reduction of the pressure in chamber 4 can be executed by removing air from this chamber for example through the outlet 12. Likewise, air can be forced into chamber 3 to increase its pressure, for example via inlet 10. Alternatively or additionally, air from chamber 3 can be forced, for example by a fan, into chamber 4.

It is also possible to have controlled leakage from or to the ambient in order to control the temperature and/or the humidity in one or both of the chambers 3, 4. This leakage can be combined with a controlled leakage between the two chambers 3, 4.

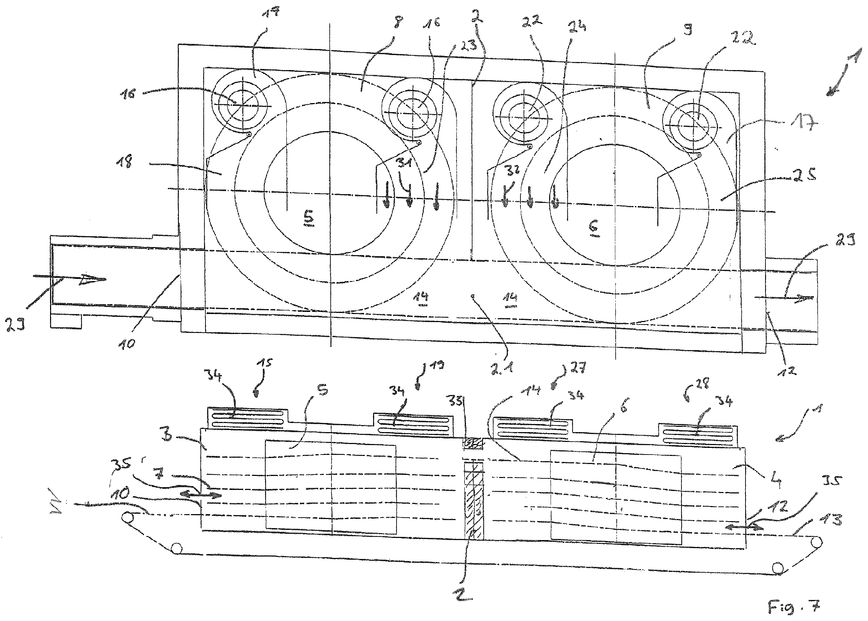

Controlled leakages to the ambient are shown in Figure 7 and depicted by arrows 35. The controlled leakage to the ambient can be utilized to adjust a parameter in one or both of the chambers and/or to achieve a controlled leakage between the two chambers. The person skilled in the art understands that the leakage 35 need not take place at the inlet or the outlet.

In the case that one chamber has an air exchange with the ambient, but no leakage between the chambers is desired, it can be suppressed by a fluid flow 26, as disclosed above.

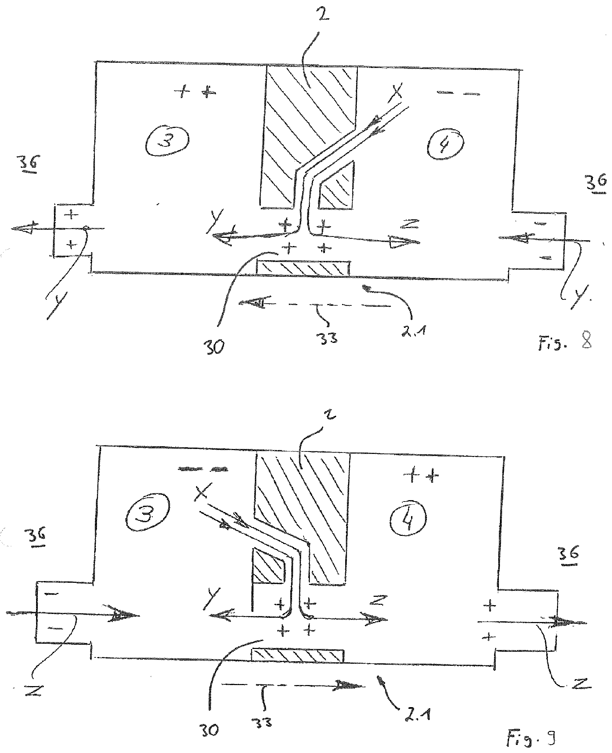

Figures 8 and 9 show another embodiment of controlled ventilation between the two chambers 3, 4 and/or the ambient 36. In the example according to figure 8, the pressure in chamber 4 is lower than the pressure in chamber 3. A fluid flow x is drawn out of chamber 4 and introduced into the guiding means 30 in the passage 2.1, where it is split into a fluid flow z which flows back to chamber 4 and a fluid flow y which flows in the direction of chamber 3. The pressure in the guiding means 30, where the fluid flow x is introduced, is higher than the pressure in chambers 3 and 4, respectively. The direction of the leakage is indicated with arrow 33. Due to this leakage 33, which is equivalent to the fluid flow y, the same fluid flow has to be introduced from the ambient 36 into chamber 4 and has to be blown out of chamber 3 into the ambient, to maintain the mass balance. By means of the process according to figure 8, it is possible to reduce the temperature and/or humidity in chambers 3 and 4, in case the humidity and temperature is higher in chamber 3 than in chamber 4. The person skilled in the art understands that the ratio in which the air flow x is split, can be adjusted by the pressure levels in chambers 3 and 4 relative to each other.

Figure 9 shows the oven according to figure 8. However, in this case the pressure in chamber 3 is lower than the pressure in chamber 4. In this case the fluid flow x is taken out of chamber 3 introduced into the guiding means 30, where the pressure is higher than in chambers 3 and 4, respectively. In the guiding means 30, the fluid flow x is split into a portion y, which flows back to chamber 3, and a portion z which flows to chamber 4. In the present case, the leakage 33 is directed from chamber 3 to chamber 4 and amounts to fluid flow z. Thus, the same amount z has to be taken out of the ambient and introduced into chamber 3 and blown out of chamber 4 into the ambient 36. The process according to figure 9 is utilized to decrease the humidity and/or the temperature in chamber 3 and to increase the temperature and humidity in chamber 4, provided the temperature and humidity are higher in chamber 3 than in chamber 4, respectively.

### Reference signs:

- 1: oven
- 2: separation means, partition
- 2.1: passage from first- to second chamber
- 3: first chamber
- 4: second chamber
- 5: drum
- 6: drum
- 7: conveyor means, conveyor belt
- 8: helical section first chamber
- 9: helical section second chamber
- 10: inlet
- 11: straight conveyor means
- 12: outlet
- 13: straight conveyor means
- 14: connecting conveyor means section
- 15: temperature control means, heating means
- 16: fan
- 17: spiral casing
- 18: air duct
- 19: temperature control means
- 20: Y-shaped air-duct
- 20.1: left branch
- 20.2: right branch
- 20.3: base
- 21: control means, valve
- 22: fan
- 23: air duct
- 24: air duct
- 25: air duct
- 26: air flow
- 26.1: air flow to the first chamber
- 26.2: air flow to the second chamber
- 27: temperature control means
- 28: temperature control means
- 29: transportation direction
- 30: guiding means
- 31: fluid flow in channel 23
- 32: fluid flow in channel 24
- 33: leakage in the passage
- 34: heating elements
- 35: leakage from or to the ambient
- 36: ambient
- x: fluid flow taken out of one chamber
- y: direction of flow, fluid flow to the first chamber 3
- z: direction of flow, fluid flow to the second chamber 4
- ++: higher pressure
- - -: lower pressure

## Claims

1. Process to operate an oven (1) comprising:
- a first chamber (3) and a second chamber (4), which are separated by separation means (2)
- conveyor means (7) for guiding products from the inlet (10) through these chambers (3, 4) to the outlet (12),
- temperature control means (15-19, 22-66, 27, 28) for controlling the temperature and/or humidity in each chamber individually using a fluid, respectively, and
- a tube (2.1) in the separation means (2) through which the conveyor means are directed from the first chamber (3) to the second chamber (4),
**characterized in, that** an air flow (26) is injected into the tube (2.1) to reduce fluid leakage between the first chamber (3) and the second chamber (4), which results in a higher pressure in the tube 30, wherein this higher pressure forces the air (26) to flow to the left towards the first chamber (3) and to the right towards the second chamber (4).

2. Process according to claim 1, **characterized in, that** the division of the flow in the tube (30) is controlled.

3. Process according to claims 1 or 2, **characterized in, that** ambient air is introduced into the first and/or the second chamber.

## Patentansprüche

1. Verfahren zum Betreiben eines Ofens (1), umfassend:
- eine erste Kammer (3) und eine zweite Kammer (4), die durch Trennmittel (2) voneinander getrennt sind
- Fördermittel (7) zum Führen von Produkten vom Einlass (10) durch diese Kammern (3, 4) zum Auslass (12),
- Temperaturregelungsmittel (15-19, 22-66, 27, 28) zum individuellen Regeln der Temperatur und/oder Feuchtigkeit in jeder Kammer unter Verwendung eines Fluids, und
- ein Rohr (2.1) in der Trennvorrichtung (2), durch das die Fördermittel von der ersten Kammer (3) zur zweiten Kammer (4) geführt sind, **dadurch gekennzeichnet, dass** ein Luftstrom (26) in das Rohr (2.1) eingeleitet wird, um die Fluidleckage zwischen der ersten Kammer (3) und der zweiten Kammer (4) zu verringern, was zu einem höheren Druck im Rohr 30 führt, wobei dieser höhere Druck die Luft (26) nach links in Richtung der ersten Kammer (3) und nach rechts in Richtung der zweiten Kammer (4) strömen lässt.

2. Verfahren nach Anspruch 1, **dadurch gekennzeichnet, dass** die Aufteilung des Strömungsflusses in dem Rohr (30) gesteuert wird.

3. Verfahren nach Anspruch 1 oder 2, **dadurch gekennzeichnet, dass** Umgebungsluft in die erste und/oder die zweite Kammer eingeleitet wird.

## Revendications

1. Procédé pour faire fonctionner un four (1) comprenant :
- une première chambre (3) et une deuxième chambre (4), qui sont séparées par des moyens de séparation (2)
- des moyens de transport (7) pour guider les produits depuis l'entrée (10) à travers ces chambres (3, 4) vers la sortie (12),
- des moyens de régulation de température (15-19, 22-66, 27, 28) pour réguler individuellement la température et/ou l'humidité dans chaque chambre à l'aide d'un fluide, respectivement, et
- un tube (2.1) dans les moyens de séparation (2) à travers lequel les moyens de transport sont dirigés de la première chambre (3) vers la deuxième chambre (4),
**caractérisé en ce qu'**un flux d'air (26) est injecté dans le tube (2.1) afin de réduire les fuites de fluide entre la première chambre (3) et la deuxième chambre (4), ce qui entraîne une pression plus élevée dans le tube 30, cette pression plus élevée forçant l'air (26) à s'écouler vers la gauche en direction de la première chambre (3) et vers la droite en direction de la deuxième chambre (4).

2. Procédé selon la revendication 1, **caractérisé en ce que** la division du flux dans le tube (30) est contrôlée.

3. Procédé selon les revendications 1 ou 2, **caractérisé en ce que** de l'air ambiant est introduit dans la première et/ou la deuxième chambre.
